# EUROPEAN PATENT SPECIFICATION

(11) **EP 1 216 903 B1**
(45) Date of publication and mention of the grant of the patent: **20.07.2005**
(21) Application number: 01130595.0
(22) Date of filing: 21.12.2001
(51) Int. Cl.: B60S 1/52, B05B 1/04

(54) **Automotive cleaning fluid sprayer**
Waschdüse für Fahrzeuge
Buse de projection de liquide de nettoyage pour véhicule

(30) Priority: 22.12.2000 IT MI002816
(43) Date of publication of application: 26.06.2002
(73) Proprietor: ITW Automotive Italia S.r.l., 10156 Torino (IT)
(72) Inventor: Cau, Pietro, 10135 Torino (IT); Yon, Fulvio, 11020 Donnas (IT)
(74) Representative: Jorio, Paolo

(56) References cited:
- EP-A- 0 913 301
- FR-A- 2 345 219
- US-A- 3 082 961
- US-A- 3 386 663
- US-A- 4 811 903

## Description

The present invention relates to an automotive cleaning fluid sprayer.

To clean automotive glass surfaces, e.g. a vehicle windscreen, fluid-dynamic sprayers are used to direct a jet of cleaning fluid, supplied under pressure from a cleaning fluid circuit, on to the surface in the form of a spray. Atomization (dispersion of the fluid in the form of fine drops) is essential to cover as large a surface area as possible and ensure thorough cleaning, and is normally achieved by virtue of the geometrical design of the inside of the spray nozzle and/or of the nozzle feed channel.

One known nozzle, for example, has an inner chamber with a small outlet hole, and a central channel is formed inside, separate from the walls of the chamber, so that the cleaning fluid is divided into separate streams which are broken up on collision with one another at the outlet hole to form a spray.

Another known so-called "flute" solution employs a nozzle having a hollow cylindrical vertical seat. At the top of the seat, an outlet slit for the cleaning fluid jet is formed adjacent to the end wall closing the seat, and, just below the slit, a contoured projection extends radially inwards from the lateral wall of the seat to atomize the cleaning fluid before it is expelled through the slit.

Another known solution employs a nozzle which is substantially horizontal with respect to the cleaning fluid feed conduit, and which has a cylindrical inner seat terminating with a spherical end wall on to which opens a small rectangular outlet hole. By virtue of the spherical shape of the wall, the fluid is broken up into different flow components which are atomized on collision.

All the above known solutions have the major drawback of involving at least two separate component parts: a sprayer body which can be fitted in an appropriate position on the vehicle body, and in which the cleaning fluid feed conduit is formed; and a nozzle fitted to the sprayer body and designed to achieve a given atomizing effect. Sprayers of this type therefore pose the problem of ensuring the nozzle is fitted correctly to the sprayer body - any error in assembly possibly resulting in impaired operation - and are also fairly expensive and complicated to produce and assemble, precisely on account of comprising (at least) two parts. US-A-3 082 961 discloses the preamble of claim 1.

It is an object of the present invention to provide a sprayer which, besides being highly effective, particularly as regards atomization of the cleaning fluid, is also cheap and easy to produce and assemble.

According to the present invention, there is provided an automotive cleaning fluid sprayer as defined in claim 1.

The sprayer according to the invention is fully effective, particularly in ensuring complete atomization of the cleaning fluid, and, unlike known solutions, does not involve producing and assembling two separate component parts. The particular structure of the sprayer according to the invention, in fact, though extremely easy produce geometrically speaking, has surprisingly been found to ensure complete atomization of the cleaning fluid with no need for a separate specially designed nozzle.

An embodiment of the present invention will be described by way of example with reference to the accompanying drawings, in which:

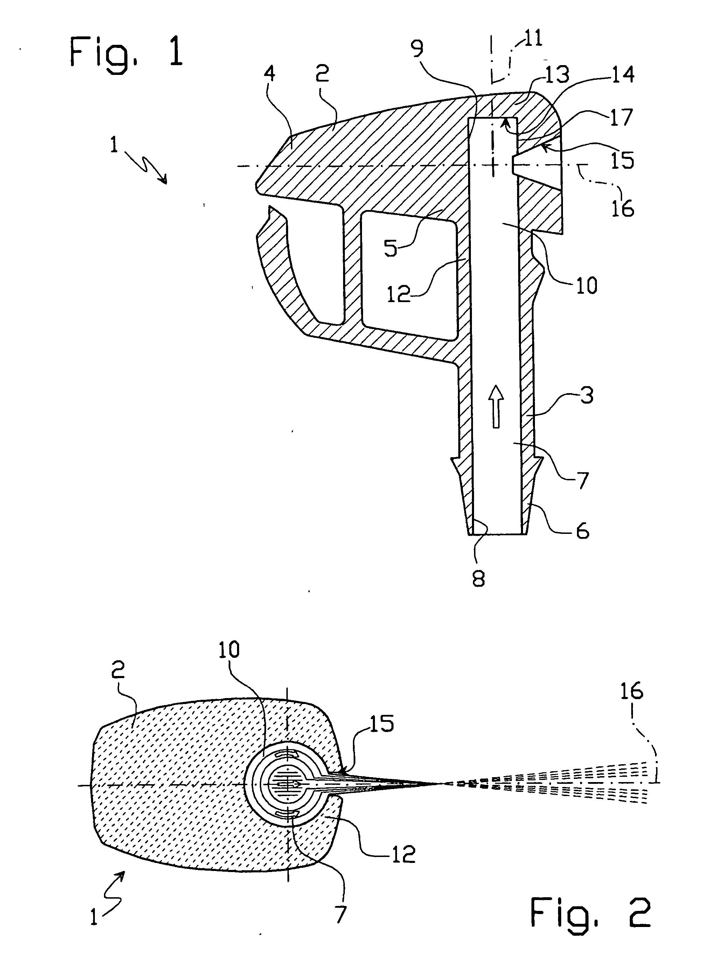

Figure 1 shows a schematic longitudinal section of an automotive cleaning fluid sprayer in accordance with the invention;
Figure 2 shows a cross section, not to scale, of the Figure 1 sprayer.

With reference to the accompanying drawings, an automotive cleaning fluid sprayer 1, in particular for a vehicle windscreen, comprises a one-piece body 2 made of polymer material. Body 2 comprises a stem 3 and a head 4 located at a first longitudinal end 5 of stem 3 and substantially perpendicular to stem 3, can be fitted, in known manner not described for the sake of simplicity, to a vehicle body (not shown), and is connectable, also in known manner, to a cleaning fluid feed circuit (not shown), e.g. by a second longitudinal end 6 of stem 3, opposite first longitudinal end 5.

Stem 3 has an inner conduit 7 for the passage of cleaning fluid supplied under pressure from the feed circuit. Conduit 7 has an open end 8 for receiving the cleaning fluid, and which is located at second longitudinal end 6 of stem 3 and is connectable in series with the cleaning fluid feed circuit; and a closed end 9 opposite end 8 and located at first longitudinal end 5 of stem 3. More specifically, at end 9, conduit 7 comprises a substantially cylindrical dead end portion 10 having a substantially straight axis 11 and defined by a cylindrical lateral wall 12. End portion 10 of conduit 7 is closed at end 9 by an end wall 13 which has a substantially flat surface 14 facing conduit 7 and substantially perpendicular to lateral wall 12 and, hence, axis 11. In the embodiment shown, conduit 7 is entirely cylindrical with a straight axis 11.

End portion 10 of conduit 7 has an outlet hole 15 through which the cleaning fluid is expelled from conduit 7, and which is formed through cylindrical lateral wall 12, at a small predetermined distance from end wall 13, and has a longitudinal axis 16 substantially perpendicular to axis 11. More specifically, hole 15 is defined by a rectangular circumferential slit formed through cylindrical lateral wall 12 and separated from end wall 13 by an annular portion 17 of lateral wall 12 of a small predetermined height comparable with the height of slit 15 itself.

Slit 15 has two minor sides (defining the height of slit 15) parallel to axis 11; two curved major sides (arc-shaped and defining the angular extension of slit 15) perpendicular to axis 11; and a section diverging outwards of conduit 7 along axis 16 so as to define a substantially truncated-pyramid-shaped longitudinal section.

In actual use, sprayer 1 is fitted to the vehicle body with stem 3 and conduit 7 substantially perpendicular to the vehicle body at the point of attachment; slit 15 is positioned facing the surface on to which the jet of cleaning fluid is to be directed (e.g. the vehicle windscreen) ; and conduit 7 is connected to the cleaning fluid feed circuit. When a jet of cleaning fluid is fed along conduit 7, the specific geometry of sprayer 1 (in particular, slit 15 formed through cylindrical lateral wall 12, at a small distance from end wall 13) divides the jet into separate streams. More specifically, the jet is divided into a central stream flowing along axis 11, and two lateral streams flowing along lateral wall 12, on diametrically opposite sides of slit 15, as shown schematically in Figure 2. All three streams are expelled simultaneously through slit 15 and, once through slit 15, are broken up and atomized on collision with one another.

## Claims

1. An automotive cleaning fluid sprayer (1) comprising a body (2) having an inner conduit (7) for the passage of a cleaning fluid and an outlet hole (15) communicating with said conduit; wherein said conduit (7) comprises at least one cylindrical dead end portion (10) having a substantially straight axis (11), defined by a cylindrical lateral wall (12) and terminating with an end wall (13); and wherein said hole (15) is defined by a circumferential slit formed through said lateral wall (12) at a small predetermined distance from said end wall (13); said small predetermined distance being comparable with the height of the slit (15);
**characterized in that, in combination**
(i)- said body (2) is a one-piece body made of polymer material and comprises a stem (3) having said inner conduit (7), the conduit (7) having an open end (8) for receiving the cleaning fluid which is located at a longitudinal end (6) of said stem (3) and is connectable in series with the cleaning fluid feed circuit;
(ii)- said conduit (7) is entirely cylindrical and its open end (8) has the same straight axis (11) as the cylindrical dead end portion (10);
(iii)- so as that a jet of cleaning fluid fed along said conduit (7) is divided into separate streams, specifically into a central stream flowing along said straight axis (11) of said conduit (7), and two lateral streams flowing along said lateral wall (12), on diametrically opposite sides of said slit (15); all said three streams being expelled simultaneously through said slit (15) and, once through said slit (15), being broken up and atomized on collision with one another.

2. A sprayer as claimed in Claim 1, **characterized in that** said end wall (13) has a substantially flat surface (14) facing said end portion (10) and substantially perpendicular to said lateral wall (12).

3. A sprayer as claimed in one of the foregoing Claims, **characterized in that** said slit (15) is a rectangular slit.

4. A sprayer as claimed in one of the foregoing Claims, **characterized in that** said slit (15) has a section diverging outwards from said conduit (7).

5. A sprayer as claimed in one of the foregoing Claims, **characterized in that** said body (2) further comprises a head (4), perpendicular to said stem(3).

## Patentansprüche

1. Reinigungsfluid-Sprühvorrichtung (1) für Fahrzeuge, aufweisend einen Körper (2) mit einer inneren Leitung (7) zum Durchfluss von Reinigungsfluid und ein Ausgangsloch (15), das mit der Leitung in Verbindung steht; wobei die Leitung (7) mindestens ein zylindrisches Blindendteil (10) mit einer im wesentlichen geraden Achse (11) aufweist, welches durch eine zylindrische Seitenwand (12) begrenzt ist und mit einer Endwand (13) endet; und wobei das Loch (15) durch einen Umfangsschlitz definiert ist, der durch die Seitenwand (12) hindurch in einem kleinen vorbestimmten Abstand von der Endwand (13) gebildet ist; wobei der kleine vorbestimmte Abstand mit der Höhe des Schlitzes (15) vergleichbar ist;
**dadurch gekennzeichnet, dass** in Kombination
(i) der Körper (2) ein einstückiger Körper aus Polymermaterial ist und einen Schaft (3) mit der inneren Leitung (7) aufweist, wobei die Leitung (7) ein offenes Ende (8) zur Aufnahme des Reinigungsfluides aufweist, welches an einem Längsende (6) des Schaftes (3) angeordnet ist und in Reihe mit dem Reinigungsfluid-Versorgungskreislauf verbindbar ist;
(ii) die Leitung (7) vollständig zylindrisch ist und ihr offenes Ende (8) die gleiche gerade Achse (11) wie der zylindrische Blindendteil (10) aufweist;
(iii) so dass ein Reinigungsfluidstrahl, der längs der Leitung (7) zugeführt wird, in separate Ströme aufgeteilt wird, insbesondere in einen zentralen Strom, der längs der geraden Achse (11) der Leitung (7) fließt, und in zwei seitliche Ströme, die längs der Seitenwand (12) auf diametral gegenüberliegenden Seiten des Schlitzes (15) fließen; wobei alle die drei Ströme gleichzeitig durch den Schlitz (15) ausgestoßen werden und, sobald sie durch den Schlitz (15) hindurch sind, bei Kollision aufgebrochen und miteinander zerstäubt werden.

2. Sprühvorrichtung nach Anspruch 1, **dadurch gekennzeichnet, dass** die Endwand (13) eine im wesentlichen flache Oberfläche (14) aufweist, die dem Endteil (10) gegenüberliegt und im wesentlichen zur Seitenwand (12) senkrecht ist.

3. Sprühvorrichtung nach einem der vorhergehenden Ansprüche, **dadurch gekennzeichnet, dass** der Schlitz (15) ein rechteckiger Schlitz ist.

4. Sprühvorrichtung nach einem der vorhergehenden Ansprüche, **dadurch gekennzeichnet, dass** der Schlitz (15) einen Abschnitt aufweist, der von der Leitung (7) nach außen divergiert.

5. Sprühvorrichtung nach einem der vorhergehenden Ansprüche, **dadurch gekennzeichnet, dass** der Körper (2) ferner einen Kopf (4) senkrecht zum Schaft (3) aufweist.

## Revendications

1. Pulvérisateur (1) de liquide de nettoyage d'automobile comprenant un corps (2) comportant un conduit interne (7) pour le passage d'un liquide de nettoyage et un orifice de sortie (15) communiquant avec ledit conduit; dans lequel ledit conduit (7) comprend au moins une partie d'extrémité en cul-de-sac cylindrique (10) ayant un axe sensiblement rectiligne (11), délimitée par une paroi latérale cylindrique (12) et se terminant par une paroi d'extrémité (13); et dans lequel ledit orifice (15) est défini par une fente circonférentielle formée à travers ladite paroi latérale (12) à une petite distance prédéterminée de ladite paroi d'extrémité (13), ladite petite distance prédéterminée étant comparable à la hauteur de la fente (15); **caractérisé en ce que**, en combinaison
(i) ledit corps (2) est un corps d'une seule pièce fait d'un matériau polymère et comprend une tige (3) comportant ledit conduit interne (7), le conduit (7) ayant une extrémité ouverte (8) pour recevoir le liquide de nettoyage qui se trouve à une extrémité longitudinale (6) de ladite tige (3) et est susceptible d'être raccordée en série au circuit d'alimentation en liquide de nettoyage;
(ii) ledit conduit (7) est entièrement cylindrique et son extrémité ouverte (8) possède le même axe rectiligne (11) que la partie d'extrémité en cul-de-sac cylindrique (10);
(iii) de sorte qu'un jet de liquide de nettoyage amené le long dudit conduit (7) est divisé en courants séparés, spécifiquement en un courant central circulant le long dudit axe rectiligne (11) dudit conduit (7), et deux courants latéraux circulant le long de ladite paroi latérale (12), sur des côtés diamétralement opposés de ladite fente (15); lesdits trois courants étant tous expulsés simultanément à travers ladite fente (15) et, une fois qu'ils ont traversé ladite fente (15), étant fragmentés et atomisés par collision l'un avec l'autre.

2. Pulvérisateur selon la revendication 1, **caractérisé en ce que** ladite paroi d'extrémité (13) présente une surface sensiblement plate (14) faisant face à ladite partie d'extrémité (10) et sensiblement perpendiculaire à ladite paroi latérale (12).

3. Pulvérisateur selon l'une quelconque des revendications précédentes, **caractérisé en ce que** ladite fente (15) est une fente rectangulaire.

4. Pulvérisateur selon l'une quelconque des revendications précédentes, **caractérisé en ce que** ladite fente (15) présente une section divergeant vers l'extérieur à partir dudit conduit (7).

5. Pulvérisateur selon l'une quelconque des revendications précédentes, **caractérisé en ce que** ledit corps (2) comprend en outre une tête (4), perpendiculaire à ladite tige (3).
